(19) Europäisches Patentamt
European Patent Office
Office européen des brevets

(11) Veröffentlichungsnummer: **0 445 402 B1**

(12) **EUROPÄISCHE PATENTSCHRIFT**

(45) Veröffentlichungstag der Patentschrift: **18.05.94**

(51) Int. Cl.[5]: **C08L 57/00**, //(C08L57/00, 69:00)

(21) Anmeldenummer: **90124515.9**

(22) Anmeldetag: **18.12.90**

(54) **Thermostabile Formmassen.**

(30) Priorität: **01.03.90 DE 4006399**

(43) Veröffentlichungstag der Anmeldung: **11.09.91 Patentblatt 91/37**

(45) Bekanntmachung des Hinweises auf die Patenterteilung: **18.05.94 Patentblatt 94/20**

(84) Benannte Vertragsstaaten: **DE ES FR GB IT**

(56) Entgegenhaltungen: **DE-A- 3 832 396**

(73) Patentinhaber: **BAYER AG**

**D-51368 Leverkusen(DE)**

(72) Erfinder: **Eckel, Thomas, Dr.**
**Gneisenaustrasse 15a**
**W-4047 Dormagen 1(DE)**
Erfinder: **Wittmann, Dieter, Dr.**
**Wolfskaul 4**
**W-5000 Köln 80(DE)**
Erfinder: **Müller, Friedemann, Dr.**
**Am Steinacker 5**
**W-4040 Neuss(DE)**
Erfinder: **Ott, Karl-Heinz, Dr.**
**Paul-Klee-Strasse 54**
**W-5090 Leverkusen 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die Erfindung betrifft thermoplastische Formmassen aus Vinylpolymerisaten mit verbesserter thermischer Stabilität, ein Verfahren zu ihrer Herstellung durch Mischen der Komponenten bei erhöhter Temperatur und ihre Verwendung zur Herstellung von Formkörpern vornehmlich durch Spritzguß oder Extrusion.

Viele Formmassen aus Vinylpolymerisaten oder Copolymerisaten, die bei Zimmertemperatur und leicht erhöhten Gebrauchstemperaturen ausgewogene Eigenschaften besitzen, zeigen nach höherer thermischer Beanspruchung, die z.B. bei der Verarbeitung kurzzeitig auftreten kann, eine deutliche Schädigung ihrer Eigenschaften aufgrund ungenügender thermischer Stabilität. Zu den Schäden gehören Oberflächenstörungen wie Blasen und Aufrisse, Verfärbungen bis hin zu Braun- oder Schwarzfärbung und teilweiser oder vollständiger Verlust des mechanischen Eigenschaften. Auslöser für diese unerwünschten Wirkungen können Radikale sein, die durch Spaltungen von Polymerketten entstehen.

Es ist deshalb notwendig, Formmassen aus Vinylpolymerisaten durch Additive zu stabilisieren. Zur Verhinderung des Abbaus wurden bereits zahlreiche Stabilisatoren vorgeschlagen, insbesondere Verbindungen mit phenolischen Hydroxylgruppen (siehe z.B.: R. Gächter und H. Müller, Taschenbuch der Kunststoff-Additive, Carl-Hanser-Verlag München 1979) oder Benzoinderivate (DE-OS 3 434 939).

Ein Nachteil dieser Stabilisatoren ist ihre Flüchtigkeit. Bei den hohen Verarbeitungstemperaturen können sie aus den Formmassen austreten und Beläge an Werkzeugen oder Oberflächenstörungen an Formteilen hervorrufen. Auch wurde Verschlechterung von mechanischen Eigenschaften wie Zähigkeit, Wärmeformbeständigkeit und Chemikalienresistenz beobachtet.

Es wurde gefunden, daß Polycarbonate auf Basis von substituierten Dihydroxydiphenylcycloalkanen, in kleinen Mengen zugesetzt, Formmassen aus Vinylpolymerisaten bei thermischer Beanspruchung stabilisieren, ohne deren Eigenschaften zu verschlechtern. Die verbesserte thermische Stabilität zeigt sich in geringerer Neigung zu Verfärbungen sowie in geringerem Molekulargewichtsabbau. Da es sich um einen polymeren Stabilisator handelt, treten die obengenannten Nachteile nicht auf.

Gegenstand der Erfindung sind thermoplastische Formmassen, enthaltend

A) 1 bis 99 Gew.-Teile Vinylpolymerisat,

B) 0,5 bis 15, vorzugsweise 0,7 bis 10, insbesondere 1 bis 7 Gew.-Teile eines speziellen aromatischen Polycarbonats auf Basis von substituierten Dihydroxydiphenylcycloalkanen

und gegebenenfalls

C) 0 bis 75 Gew.-Teile eines weiteren thermoplastischen Harzes.

<u>Vinylpolymerisate A</u>

Vinylpolymerisate im Sinne der Erfindung sind Homo- oder Copolymerisate aus mindestens einem Vinylmonomeren. Erfindungsgemäße Vinylpolymerisate sind z.B.
kautschukfreie Vinylpolymerisate (A.1), kautschukhaltige Vinylpolymerisate (wie Pfropfpolymerisate von Vinylmonomeren auf einen Kautschuk) (A.2), Mischungen aus kautschukfreien und kautschukhaltigen Vinylpolymerisaten.

Die Polymerisate A.1 sind harzartig, thermoplastisch und kautschukfrei.

Bevorzugte Vinylpolymerisate A.1 sind solche aus Styrol, α-Methylstyrol, kernsubstituiertes Styrolen, Acrylaten und Methacrylaten.

Bevorzugte Vinyl-Copolymerisate A.1 sind solche aus Styrol, α-Methylstyrol und/oder kernsubstituiertem Styrol (A.1.1) einerseits und Acrylnitril, Methacrylnitril, Methylmethacrylat, Maleinsäureanhydrid und/oder N-substituiertem Maleinimid andererseits (A.1.2).

Besonders bevorzugte Gewichtsverhältnisse im thermoplastischen Copolymerisat A.1 sind 50 bis 98 Gew.-% A.1.1 und 50 bis 2 Gew.-% A.1.2.

Besonders bevorzugte Copolymerisate A.1 sind solche aus Styrol mit Acrylnitril und gegebenenfalls mit Methylmethacrylat, aus α-Methylstyrol mit Acrylnitril und gegebenenfalls mit Methylmethacrylat, oder aus Styrol und α-Methylstyrol mit Acrylnitril und gegebenenfalls mit Methylmethacrylat.

Die Styrol-Acrylnitril-Copolymerisate A.1 sind bekannt und lassen sich durch radikalische Polymerisation, insbesondere durch Emulsions-, Suspensions-, Lösungs- oder Massepolymerisation herstellen, Die Copolymerisate A.1 besitzen vorzugsweise Molekulargewichte $\overline{M}_w$ (Gewichtsmittel, ermittelt durch Lichtstreuung oder Sedimentation) zwischen 15.000 und 200.000.

Besonders bevorzugte erfindungsgemäße Copolymerisate A.1 sind auch statistisch aufgebaute Copolymerisate aus Styrol und Maleinsäureanhydrid, die bevorzugt durch eine kontinuierliche Masse- oder Lösungspolymerisation bei unvollständigen Umsätzen aus dem entsprechenden Monomeren hergestellt werden können.

Die Anteile der beiden Komponenten der erfindungsgemäß geeigneten statistisch aufgebauten Styrol-Maleinsäureanhydrid-Copolymeren können innerhalb weiter Grenzen variiert werden. Der bevorzugte Gehalt an Maleinsäureanhydrid liegt bei 5 bis 25 Gew.-%.

Anstelle von Styrol können die Polymeren auch kernsubstituierte Styrole, wie p-Methylstyrol, Vinyltoluol, 2,4-Dimethylstyrol und andere substituierte Styrole, wie α-Methylstyrol, enthalten.

Die Molekulargewichte $\overline{M}_n$ (Zahlenmittel) der erfindungsgemäß geeigneten statistisch aufgebauten Styrol-Maleinsäureanhydrid-Copolymeren A.1 können über einen weiten Bereich variieren. Bevorzugt ist der Bereich von 60.000 bis 200.000. Bevorzugt ist für diese Produkte eine Grenzviskosität von 0,3 bis 0,9 (gemessen in Dimethylformamid bei 25 °C; siehe hierzu Hoffmann, Krömer, Kuhn, Polymeranalytik I, Stuttgart, 1977, Seite 316 ff.).

Die erfindungsgemäßen Vinylpolymerisate A.2 sind thermoplastisch und kautschukhaltig. Bevorzugte Vinylpolymerisate A.2 stellen Pfropfpolymerisate dar. Diese umfassen z.B. Pfropfcopolymerisate mit kautschukelastischen Eigenschaften, die im wesentlichen aus mindestens 2 der folgenden Monomeren erhältlich sind: Chloropren, Butadien-1,3, Isopropen, Styrol, Acrylnitril, Ethylen, Propylen, Vinylacetat und (Meth-)Acrylsäureester mit 1 bis 18 C-Atomen in der Alkoholkomponente; also Polymerisate, wie sie z.B. in "Methoden der Organischen Chemie" (Houben-Weyl), Bd. 14/1, Georg Thieme-Verlag, Stuttgart, 1961, Seite 393 bis 406 und in C.B. Bucknall, "Toughened Plastics", Appl. Science Publishers, London, 1977, beschrieben sind. Bevorzugte Polymerisate A.2 sind partiell vernetzt und besitzen Gelgehalte von über 20 Gew.-%, vorzugsweise über 40 Gew.-%, insbesondere über 60 Gew.-%.

Bevorzugte Pfropfpolymerisate A.2 umfassen Pfropfpolymerisate aus:

A.2.1 5 bis 95, vorzugsweise 30 bis 80, Gew.-Teilen, eines Copolymeren aus

A.2.1.1 50 bis 95 Gew.-Teilen Styrol, α-Methylstyrol, halogen- oder methylkernsubstituierten Styrolen, Methylmethacrylat oder Mischungen dieser Verbindungen und

A.2.1.2 5 bis 50 Gew.-Teilen Acrylnitril, Methacrylnitril, Methylmethacrylat, Maleinsäureanhydrid, $C_1$-$C_4$-alkyl- bzw. phenyl-N-substituierten Maleinimiden oder Mischungen dieser Verbindungen auf

A.2.2 5 bis 95, vorzugsweise 20 bis 70, Gew.-Teilen Polymerisat mit einer Glasübergangstemperatur unter -10 ° C.

Bevorzugte Pfropfpolymerisate A.2 sind z.B. mit Styrol und/oder Acrylnitril und/oder (Meth-)Acrylsäurealkylestern gepfropfte Polybutadiene, Butadien/Styrol-Copolymerisate und Acrylatkautschuke; d.h. Copolymerisate der in der DE-OS 1 694 173 (= US-PS 3 564 077) beschriebenen Art; mit Acryl- oder Methacrylsäurealkylestern, Vinylacetat, Acrylnitril, Styrol und/oder Alkylstyrolen gepfropfte Polybutadiene, Butadien/Styrol- oder Butadien/Acrylnitril-Copolymerisate, Polyisobutene oder Polyisoprene, wie sie z.B. in der DE-OS 2 348 377 (= US-PS 3 919 353) beschrieben sind.

Besonders bevorzugte Polymerisate A.2 sind z.B. ABS-Polymerisate, wie sie in der DE-OS 2 035 390 (= US-PS 3 644 574) oder in der DE-OS 2 248 242 (= GB-PS 1 409 275) beschrieben sind.

Besonders bevorzugte Pfropfpolymerisate A.2 sind erhältlich durch Pfropfpolymerisation von

α) 10 bis 70, vorzugsweise 15 bis 50, insbesondere 20 bis 40, Gew.-%, bezogen auf Pfropfpolymerisat A.2, mindestens eines Acrylsäureesters, Methacrylsäureesters, oder 10 bis 70, vorzugsweise 15 bis 50 , insbesondere 20 bis 40, Gew.-% eines Gemisches aus 10 bis 50, vorzugsweise 20 bis 35, Gew.-%; bezogen auf Gemisch, Acrylnitril oder Acrylsäureester, Methacrylsäureester, und 50 bis 90, vorzugsweise 65 bis 80, Gew.-%, bezogen auf Gemisch, Styrol, als Pfropfauflage A.2.1 auf

β) 30 bis 90, vorzugsweise 50 bis 85, insbesondere 60 bis 80, Gew.-%, bezogen auf Pfropfpolymerisat A.2, eines Butadien-Polymerisats mit mindestens 50 Gew.-%, bezogen auf β, Butadienresten als Pfropfgrundlage A.2.2,

wobei vorzugsweise der Gelanteil der Pfropfgrundlage β mindestens 70 Gew.-% (in Toluol gemessen), der Pfropfgrad G 0,15 bis 0,55 und der mittlere Teilchendurchmesser $d_{50}$ des Pfropfpolymerisats A.2 0,05 bis 2 µm, vorzugsweise 0,1 bis 0,6 µm, beträgt.

Acrylsäureester und Methacrylsäureester α sind Ester der Acrylsäure oder Methacrylsäure und einwertiger Alkohole mit 1 bis 18 C-Atomen. Besonders bevorzugt sind Methacrylsäuremethylester, -ethylester und -propylester, n-Butylacrylat, t-Butylacrylat und t-Butylmethacrylat.

Die Pfropfgrundlage β kann neben Butadienresten bis zu 50 Gew.-%, bezogen auf β, Reste anderer ethylenisch ungesättigter Monomeren, wie Styrol, Acrylnitril, Ester der Acryl- oder Methacrylsäure mit 1 bis 4 C-Atomen in der Alkoholkomponente (wie Methylacrylat, Ethylacrylat, Methylmethacrylat, Ethylmethacrylat), Vinylester und/oder Vinylether enthalten. Die bevorzugte Pfropfgrundlage β besteht aus reinem Polybutadien.

Erfindungsgemäß werden als Pfropfpolymerisate A.2 auch die Produkte bezeichnet, die durch Polymerisation der Pfropfmonomeren in Gegenwart der Pfropfgrundlage erhalten worden sind, obwohl die Pfropfmonomeren dabei nicht vollständig auf die Pfropfgrundlage polymerisiert werden.

Der Pfropfgrad G bezeichnet das Gewichtsverhältnis von aufgepfropften Pfropfmonomeren zur Pfropfgrundlage und ist dimensionslos.

Der mittlere Teilchendurchmesser $d_{50}$ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), Seite 782 bis 796) bestimmt werden.

Besonders bevorzugte Polymerisate A.2 sind auch Pfropfpolymerisate aus

$\tau$) 20 bis 90 Gew.-%, bezogen auf A.2, Acrylatkautschuk mit einer Glasübergangstemperatur unter -20° C als Pfropfgrundlage A.2.2 und

$\delta$) 10 bis 80 Gew.-%, bezogen auf A.2, mindestens eines polymerisierbaren, ethylenisch ungesättigten Monomeren, dessen bzw, deren in Abwesenheit von 1. entstandenen Homo- bzw. Copolymerisate eine Glasübergangstemperatur über 25° C hätten, als Pfropfmonomere A.2.1.

Die Acrylatkautschuke $\tau$ der Polymerisate A.2 sind vorzugsweise Polymerisate aus Acrylsäurealkylestern, gegebenenfalls mit bis zu 40 Gew.-%, bezogen auf $\tau$, anderen polymerisierbaren, ethylenisch ungesättigten Monomeren. Zu den bevorzugten polymerisierbaren Acrylsäureestern gehören $C_1$-$C_8$-Alkylester, beispielsweise Methyl-, Ethyl-, Butyl-, n-Octyl- und 2-Ethyl-hexylester; Halogenalkylester, vorzugsweise Halogen-$C_1$-$C_8$-alkyl-ester, wie Chlorethylacrylat, sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäure mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Trivinylcyanurat, Triacryloylhexahydro-s-triazin, Triallylbenzole.

Die Menge der vernetzten Monomere beträgt vorzugsweise 0,02 bis 5, insbesondere 0,05 bis 2, Gew.-%, bezogen auf die Pfropfgrundlage $\tau$.

Bei cyclischen vernetzenden Monomeren mit mindestens 3 ethylenisch ungesättigten Gruppen ist es vorteilhaft, die Menge auf unter 1 Gew.-% der Pfropfgrundlage $\tau$ zu beschränken.

Bevorzugte "andere" polymerisierbare, ethylenisch ungesättigte Monomere, die neben den Acrylsäureestern gegebenenfalls zur Herstellung der Pfropfgrundlage $\tau$ dienen können, sind z.B. Acrylnitril, Styrol, $\alpha$-Methylstyrol, Acrylamide, Vinyl-$C_1$-$C_6$-alkylether Methylmethacrylat, Butadien. Bevorzugte Acrylatkautschuke als Pfropfgrundlage $\tau$ sind Emulsionspolymerisate, die einen Gelgehalt von mindestens 60 Gew.-% aufweisen.

Weitere geeignete Pfropfgrundlagen A.2.2 sind Silikonkautschuke mit pfropfaktiven Stellen, wie sie in den DE 37 04 657, DE 37 04 655, DE 36 31 540 und DE 36 31 539 beschrieben werden.

Der Gelgehalt der Pfropfgrundlage A.2.2 wird bei 25°C in Dimethylformamid bestimmt (M. Hoffmann, H. Krömer, R. Kuhn, Polymeranalytik I und II, Georg Thieme-Verlag, Stuttgart, 1977).

Die Pfropfpolymerisate A.2 können nach bekannten Verfahren wie Masse-, Suspensions-, Emulsions- oder Masse-Suspensionsverfahren hergestellt werden.

Grundsätzlich kommen als Kautschuke (Pfropfgrundlagen) Dienkautschuk, Acrylatkautschuk, Silikonkautschuk und Ethylen-Propylen-Dien-Kautschuk infrage.

Mischungen aus kautschukfreien Polymerisaten A.1 und kautschukhaltigen Polymerisaten A.2 sind besonders bevorzugt.

Polycarbonate B

Polycarbonate B im Sinne der Erfindung sind thermoplastische, aromatische Polycarbonate mit Molekulargewichten $\overline{M}_w$ (Gewichtsmittel) von mindestens 2.000, vorzugsweise von 10.000 bis 300.000, die bifunktionelle Carbonatstruktureinheiten der Formel (I) enthalten,

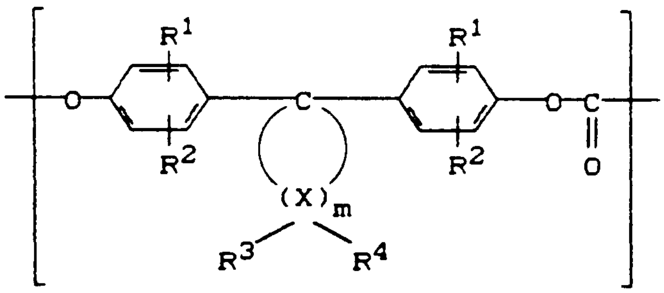

(I)

worin

$R^1$ und $R^2$ unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl,

m eine ganze Zahl von 4 bis 7, bevorzugt 4 oder 5,

$R^3$ und $R^4$ für jedes X individuell wählbar, unabhängig voneinander Wasserstoff oder $C_1$-$C_6$-Alkyl

und

X Kohlenstoff bedeuten, mit der Maßgabe, daß an mindestens einem Atom X $R^3$ und $R^4$ gleichzeitig Alkyl bedeuten.

Ausgangsprodukte für die Polycarbonate B sind Dihydroxydiphenylcycloalkane der Formel (II),

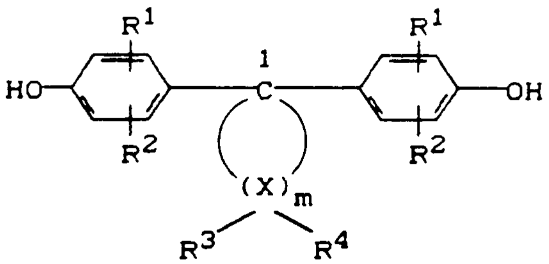

(II)

worin

X, $R^1$, $R^2$, $R^3$, $R^4$ und m die für die Formel (I) genannte Bedeutung haben.

Bevorzugt sind an 1 bis 2 Atomen X, insbesondere nur an einem Atom X, $R^3$ und $R^4$ gleichzeitig Alkyl. Bevorzugter Alkylrest ist Methyl; die X-Atome in $\alpha$-Stellung zu dem di-phenyl-substituierten C-Atom (C-1) sind bevorzugt nicht dialkylsubstituiert, dagegen ist die Alkyldisubstitution in $\beta$-Stellung zu C-1 bevorzugt.

Bevorzugt sind Dihydroxydiphenylcycloalkane mit 5 und 6 Ring-C-Atomen im cycloaliphatischen Rest [m = 4 oder 5 in Formel (II)], beispielsweise die Diphenole der Formeln (IIa) bis (IIc),

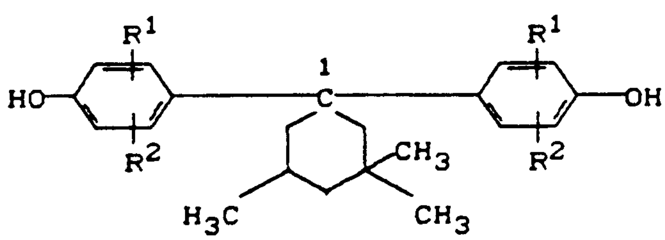

(IIa)

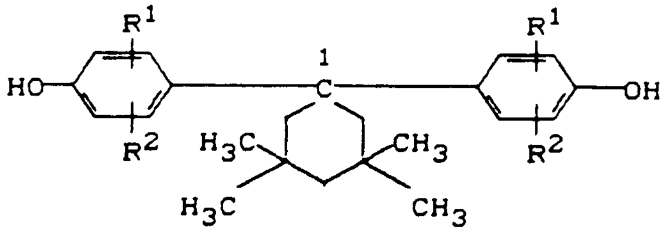

(IIb)

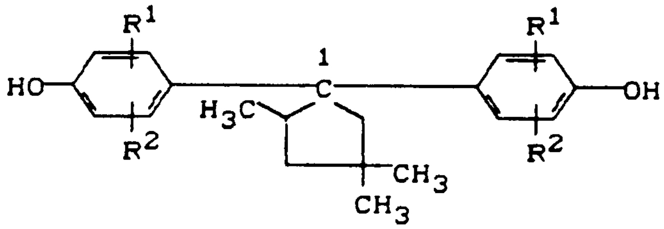

(IIc)

wobei das 1,1-Bis-(4-hydroxyphenyl)-3,3,5-trimethylcyclohexan (Formel (IIa) mit $R^1$ und $R^2$ gleich H) besonders bevorzugt ist.

Die Polycarbonate B können gemäß der Deutschen Offenlegungsschrift 3 832 396 aus Diphenolen der Formel (II) hergestellt werden.

Es können sowohl ein Diphenol der Formel (II) unter Bildung von Homopolycarbonaten als auch mehrere Diphenole der Formel (II) unter Bildung von Copolycarbonaten verwendet werden.

Außerdem können die Diphenole der Formel (II) auch im Gemisch mit anderen Diphenolen, beispielsweise mit denen der Formel (III)

HO-Z-OH (III)

zur Herstellung von hochmolekularen, thermoplastischen, aromatischen Polycarbonaten verwendet werden.

Geeignete andere Diphenole der Formel (III) sind solche, in denen Z ein aromatischer Rest mit 6 bis 30 C-Atomen ist, der einen oder mehrere aromatische Kerne enthalten kann, substituiert sein kann und aliphatische Reste oder andere cycloaliphatische Reste als die der Formel (II) oder Heteroatome als Brückenglieder enthalten kann.

Beispiele für Diphenole der Formel (III) sind
Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
$\alpha,\alpha'$-Bis-(hydroxyphenyl)-diisopropylbenzole
sowie deren kernalkylierte und kernhalogenierte Verbindungen.

Diese und weitere geeignete andere Diphenole sind z.B. in den US-PS 3 028 365, 2 999 835, 3 148 172, 3 275 601, 2 991 273, 3 271 367, 3 062 781, 2 970 131 und 2 999 846, in den deutschen Offenlegungsschriften 1 570 703, 2 063 050, 2 063 052, 2 211 0956, der französichen Patentschrift 1 561 518 und in der Monographie "H. Schnell, Chemistry and Plastics of Polycarbonates, Interscience Publishers, New York, 1964", beschrieben.

Bevorzugte andere Diphenole sind beispielsweise:
4,4'-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,

α,α'-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
α,α'-Bis-(3,5-dimethyl-4-hydroxyphenyl)-p-diisopropylbenzol,
2,2-Bis-(3,5-dichlor-4-hydroxyphenyl)-propan und
2,2-Bis-(3,5-dibrom-4-hydroxyphenyl)-propan.

Besonders bevorzugte Diphenole der Formel (III) sind beispielsweise:
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan und
1,1-Bis-(4-hydroxyphenyl)-cyclohexan.

Insbesondere ist 2,2-Bis-(4-hydroxyphenyl)-propan (Bisphenol A) bevorzugt.

Die anderen Diphenole können sowohl einzeln als auch im Gemisch eingesetzt werden.

Das molare Verhältnis von Diphenolen der Formel (II) zu den gegebenenfalls mitzuverwendenden anderen Diphenolen der Formel (III) ist von 100 Mol-% (II) zu 0 Mol-% (III) bis 20 Mol-% (II) zu 80 Mol-% (III), vorzugsweise von 100 Mol-% (II) zu 0 Mol-% (III) bis 25 Mol-% (II) zu 75 Mol-% (III).

Die hochmolekularen Polycarbonate aus den Diphenolen der Formel (II), gegebenenfalls in Kombination mit anderen Diphenolen können in an sich bekannter Weise hergestellt werden. Dabei können die verschiedenen Diphenole sowohl statistisch als auch blockweise miteinander verknüpft sein.

Diese Polycarbonate können in an sich bekannter Weise verzweigt sein. Wenn Verzweigung gewünscht wird, kann sie in bekannter Weise durch Einkondensieren geringer Mengen, vorzugsweise Mengen zwischen 0,05 und 2,0 Mol-% (bezogen auf eingesetzte Diphenole), an drei- oder mehr als dreifunktionellen Verbindungen, insbesondere solchen mit drei oder mehr als drei phenolischen Hydroxylgruppen erreicht werden. Einige Verzweiger mit drei oder mehr als drei phenolischen Hydroxylgruppen sind:
Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-(4,4-bis-(4-hydroxyphenyl)-cyclohexyl)-propan,
2,4-Bis-(4-hydroxyphenyl-isopropyl)-phenol,
2,6-Bis-(2-hydroxy-5-methyl-benzyl)-4-methylphenol,
2-(4-Hydroxyphenyl)-2-(2,4-dihydroxyphenyl)-propan,
Hexa-[4-(4-hydroxyphenyl-isopropyl)-phenyl]-orthoterephthalsäureester,
Tetra-(4-hydroxyphenyl)-methan,
Tetra-[4-(4-hydroxyphenyl-isopropyl)-phenoxy]-methan und
1,4-Bis-[(4'-,4"-dihydroxytriphenyl)-methyl]-benzol.

Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Als Kettenabbrecher zur an sich bekannten Regelung des Molekulargewichts der Polycarbonate B dienen monofunktionelle Verbindungen in üblichen Konzentrationen. Geeignete Verbindungen sind z.B. Phenol, tert.-Butylphenole oder andere Alkyl-$C_1$-$C_7$-substituierte Phenole. Zur Regelung des Molekulargewichts sind insbesondere kleine Mengen Phenole der Formel (IV) geeignet

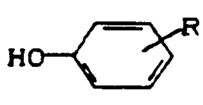

(IV)

worin R einen verzweigten $C_8$- und/oder $C_9$-Alkylrest darstellt. Bevorzugt ist im Alkylrest R der Anteil an $CH_3$-Protonen zwischen 47 und 89 % und der Anteil der CH- und $CH_2$-Protonen zwischen 53 und 11 %;

ebenfalls bevorzugt ist R in o- und/oder p-Stellung zur OH-Gruppe, und besonders bevorzugt die obere Grenze des ortho-Anteils 20 %. Die Kettenabbrecher werden im allgemeinen in Mengen von 0,5 bis 10, bevorzugt 1,5 bis 8 Mol-%, bezogen auf eingesetzte Diphenole, eingesetzt.

Die Polycarbonate B können vorzugsweise durch Phasengrenzflächenpolycondensation (vergl. H. Schnell, "Chemistry an Physics of Polycarbonates", Polymer Reviews, Vol. IX, Seite 33 ff., Interscience Publ., 1964) in an sich bekannter Weise hergestellt werden, Hierbei werden die Diphenole der Formel (II) in wäßrig alkalischer Phase gelöst. Zur Herstellung von Copolycarbonaten mit anderen Diphenolen werden Gemische von Diphenolen der Formel (II) und den anderen Diphenolen, beispielsweise denen der Formel (III), eingesetzt, Zur Regulierung des Molekulargewichts können Kettenabbrecher z.B. der Formel (IV) zugegeben werden. Dann wird in Gegenwart einer inerten, vorzugsweise Polycarbonat lösenden, organischen Phase mit Phosgen nach der Methode der Phasengrenzflächenkondensation umgesetzt. Die Reaktionstemperatur liegt zwischen 0° C und 40° C.

Die gegebenenfalls mitverwendeten Verzweiger (bevorzugt 0,05 bis 2,0 Mol-%) können entweder mit den Diphenolen in der wäßrig alkalischen Phase vorgelegt werden oder in dem organischen Lösungsmittel gelöst vor der Phosgenierung zugegeben werden.

Neben den Diphenolen der Formel (II) und gegebenenfalls anderen Diphenolen (III) können auch deren Mono- und/oder Bis-chlorkohlensäureester mitverwendet werden, wobei diese in organischen Lösungsmitteln gelöst zugegeben werden. Die Menge an Kettenabbrechern sowie an Verzweigern richtet sich dann nach der molaren Menge von Diphenolat-Resten entsprechend Formel (II) und gegebenenfalls Formel (III); bei Mitverwendung von Chlorkohlensäureestern kann die Phosgenmenge in bekannter Weise entsprechend reduziert werden.

Geeignete organische Lösungsmittel für die Kettenabbrecher sowie gegebenenfalls für die Verzweiger und die Chlorkohlensäureester sind beispielsweise Methylenchlorid, Chlorbenzol, Aceton, Acetonitril sowie Mischungen dieser Lösungsmittel, insbesondere Mischungen aus Methylenchlorid und Chlorbenzol. Gegebenenfalls können die verwendeten Kettenabbrecher und Verzweiger im gleichen Solvens gelöst werden.

Als organische Phase für die Phasengrenzflächenpolykondensation dient beispielsweise Methylenchlorid, Chlorbenzol sowie Mischungen aus Methylenchlorid und Chlorbenzol.

Als wäßrige alkalische Phase dient beispielsweise wäßrige NaOH-Lösung.

Die Herstellung der Polycarbonate B durch Phasengrenzflächenpolykondensation kann in üblicher Weise durch Katalysatoren wie tertiäre Amine, insbesondere tertiäre aliphatische Amine wie Tributylamin oder Triethylamin katalysiert werden; die Katalysatoren können in Mengen von 0,05 bis 10 Mol-%, bezogen auf Mole an eingesetzten Diphenolen eingesetzt werden. Die Katalysatoren können vor Beginn der Phosgenierung oder während oder auch nach der Phosgenierung zugesetzt werden.

Die Polycarbonate B können auch nach dem bekannten Verfahren in homogener Phase, dem sogenannten "Pyridinverfahren" sowie nach dem bekannten Schmelzumesterungsverfahren unter Verwendung von beispielsweise Diphenylcarbonat anstelle von Phosgen hergestellt werden.

Die Polycarbonate B haben bevorzugt Molekulargewichte $\overline{M}_w$ (Gewichtsmittel, ermittelt durch Gelchromatographie nach vorheriger Eichung) von mindestens 2.000, besonders bevorzugt von 10.000 bis 300.000 und insbesondere von 10.000 bis 80.000. Sie können linear oder verzweigt sein, sie sind Homopolycarbonate oder Copolycarbonate auf Basis der Diphenole der Formel (II).

Die besonders bevorzugten Polycarbonate B sind solche, in denen in den Struktureinheiten der Formel (I) m = 4 oder 5 ist und ganz besonders solche aus Einheiten der Formel (V)

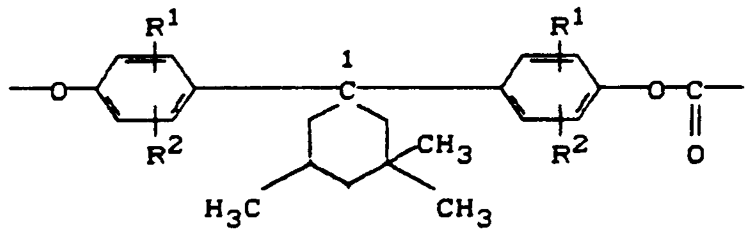

(V)

worin

R[1] und R[2] die für Formel (I) genannte Bedeutung haben, besonders bevorzugt aber Wasserstoff sind.

Diese Polycarbonate auf Basis der Diphenole der Formel (IIa), worin insbesondere $R^1$ und $R^2$ Wasserstoff sind, besitzen zur hohen Wärmeformbeständigkeit außerdem eine gute UV-Stabilität und ein unerwartet gutes Fließverhalten in der Schmelze.

Thermoplastische Harze C

Die erfindungsgemäßen Formmassen können neben A und B eines oder mehrere thermoplastische Harze C enthalten. Geeignet sind thermoplastische Harze, die mit A wenigstens teilweise verträglich sind, und deren Glasübergangstemperatur oberhalb von 10° C liegt.

Durch den Zusatz von C lassen sich z.B. die Verarbeitbarkeit, die Spannungsrißbeständigkeit oder die mechanischen Eigenschaften der Formmassen verbessern, Bevorzugte thermoplastische Harze C sind:

Polyalkylenterephthalate (C.1) wie in den DE-OS 2 407 647, 2 407 776 und 2 715 932 beschrieben, aromatische Polycarbonate (C.2) wie in US-PS 2 999 835, GB-PS 772 627 oder DE-OS 3 334 872 beschrieben, aromatische Polyestercarbonate (C.3) wie in den DE-OS 1 495 626, 2 232 877, 2 703 376, 3 000 610, 2 714 544, 2 940 024 und 3 007 934 beschrieben, aromatische Polysulfone (C.4) wie in US-PS 3 264 536, GB-PS 1 264 900 und EP-A 38 028 beschrieben.

Die erfindungsgemäßen Formmassen können weitere, für Vinylpolymerisate, Pfropfpolymerisate und aromatische Polycarbonate bekannte Zusätze, wie Stabilisatoren, Pigmente, Fließhilfsmittel, Entformungsmittel, Flammschutzmittel und Antistatika, in den üblichen Mengen enthalten.

Die erfindungsgemäßen Formmassen können hergestellt werden, indem man die Bestandteile in bekannter Weise vermischt und bei erhöhten Temperaturen, vorzugsweise bei 200 bis 350°C, in üblichen Vorrichtungen, wie Innenknetern, Extrudern oder Doppelwellenschnecken, schmelzcompoundiert oder schmelzextrudiert. Die einzelnen Komponenten können nacheinander oder gleichzeitig gemischt werden.

Weiterer Gegenstand der Erfindung ist also ein Verfahren zur Herstellung der beschriebenen Formmassen durch Mischen der Komponenten bei erhöhter Temperatur.

Die erfindungsgemäßen Formmassen können zur Herstellung von Formkörpern jeder Art, z.B. durch Spritzgießen, verwendet werden, Beispiele für Formkörper sind: Gehäuseteile (z.B. für Haushaltsgeräte, wie Saftpressen, Kaffeemaschinen, Mixer), Abdeckplatten für das Baugewerbe oder Automobilteile. Sie werden außerdem für elektrische Geräte, z.B. für Steckerleisten, eingesetzt, weil sie sehr gute elektrische Eigenschaften haben.

Formkörper können auch durch Tiefziehen aus vorher hergestellten Platten oder Folien hergestellt werden.

Weiterer Gegenstand der Erfindung ist also die Verwendung der beschriebenen Formmassen zur Herstellung von Formkörpern.

Beispiele

Vinylpolymerisate A

A1

Polystyrol mit einem Gewichtsmittel des Molekulargewichtes von 85.000 g/mol, hergestellt durch Emulsionspolymerisation.

A2

Styrol/Acrylnitril-Copolymerisat mit einem Styrol/Acrylnitril-Verhältnis von 72:28 und einer Grenzviskosität von 0,55 dl/g (Messung in Dimethylformamid bei 20°C).

A3

Styrol-Maleinsäureanhydrid-Copolymerisat mit einem Maleinsäure-Anteil von 8 % der Fa. Arco Polymers Inc. (Dylark 232) mit einem Zahlenmittel des Molekulargewichts von 135.000 g/mol.

A4

Pfropfpolymerisat von 45 Gew.-Teilen eines Copolymerisats aus Styrol und Acrylnitril im Verhältnis 72:28 auf

55 Gew.-Teile teilchenförmigen vernetzten Polybutadienkautschuk (mittlerer Teilchendurchmesser $d_{50}$ = 0,4 µm), hergestellt durch Emulsionspolymerisation.

A5

Pfropfpolymerisat von 20 Gew.-Teilen eines Copolymerisats aus Methylmethacrylat und n-Butylacrylat im Verhältnis 90:10 auf 80 Gew.-Teile teilchenförmigen vernetzten Polybutadienkautschuk (mittlerer Teilchendurchmesser $d_{50}$ = 0,4 µm), hergestellt durch Emulsionspolymerisation.

Polycarbonate B

Herstellung:

1.436,4 g (6,3 Mol) Bisphenol A [2,2-Bis-(4-hydroxyphenyl)-propan, 2.387,0 g (7,7 Mol) 1,1-Bis-(4-hydroxyphenyl)-3,3,5-trimethylcyclohexan, 7.476,0 g (84 Mol) 45 %ige NaOH und 33,7 l Wasser werden in einer Inertgas-Atmosphäre unter Rühren gelöst. Dann fügt man eine Lösung von 36,9 g (0,392 Mol) Phenol in 11 l Methylenchlorid und 13 l Chlorbenzol zu. In die gut gerührte Lösung wurden bei pH 13 - 14 und 21 - 25° C 2.772 g (28 Mol) Phosgen eingeleitet. Danach werden 14 ml Ethylpiperidin zugegeben und noch 45 min gerührt. Die bisphenolatfreie wäßrige Phase wird abgetrennt, die organische Phase nach Ansäuern mit Phosphorsäure mit Wasser elektrolytfrei gewaschen und vom Lösungsmittel befreit. Das Polycarbonat zeigte eine rel. Lösungsviskosität von 1,30. Die Glastemperatur des Polymers wurde zu 206° C bestimmt (DSC).

Thermoplastische Harze C

Lineares Polycarbonat auf Basis Bisphenol A mit einer relativen Lösungsviskosität von 1,26 bis 1,28, gemessen in $CH_2Cl_2$ bei 25° C und einer Konzentration von 0,5 g/ml.

Untersuchungen zur Thermostabilität der Formmassen

Die Komponenten wurden auf einem 1,3 l-Innenkneter bei Temperaturen von 200 bis 260° C aufgeschmolzen, gemischt und homogenisiert. Die Mischungen wurden anschließend granuliert. Zur Beurteilung der Thermostabilität der Formmassen wurde die Eigenfarbe und der Abbau bei thermischer Belastung herangezogen.

a) Eigenfarbe bei thermischer Belastung
Die Granulate wurden in einem offenen Reagenzglas, das in einem regelbaren Heizblock angeordnet ist, 60 Minuten bei 300° C unter langsamem Rühren (5 U/min) gehalten. Zu Beginn sowie nach 30 bzw. 60 min wurde die Farbe visuell beurteilt.

Tabelle 1: Beurteilung der Eigenfarbe

| Beispiel | Komponenten A1 | A2 | A3 | A4 | A5 | B | C | Eigenfarbe nach 0 | 30 | 60 min Verweilzeit |
|---|---|---|---|---|---|---|---|---|---|---|
| | [Gew.-%] | | | | | | | | | |
| 1(Vgl.) | 100 | - | - | - | - | - | - | weiß | beige | hell-braun |
| 2 | 95 | - | - | - | - | 5 | - | weiß | hell-gelb | hell-gelb |
| 3(Vgl.) | - | 100 | - | - | - | - | - | weiß | braun | dunkel-braun |
| 4 | - | 95 | - | - | - | 5 | - | weiß | beige | braun |
| 5(Vgl.) | - | - | 100 | - | - | - | - | weiß | beige | hell-braun |
| 6 | - | - | 95 | - | - | 5 | - | weiß | beige | beige |
| 7(Vgl.) | - | - | - | 100 | - | - | - | weiß | hell-braun | schwarz |
| 8 | - | - | - | 95 | - | 5 | - | weiß | beige | hell-braun |
| 9(Vgl.) | - | - | - | - | 100 | - | - | weiß | braun | schwarz-braun |
| 10 | - | - | - | - | 95 | 5 | - | weiß | hell-braun | braun |
| 11(Vgl.) | - | 75 | - | 25 | - | - | - | hell-gelb | beige | dunkel-braun |
| 12 | - | 71 | - | 24 | - | 5 | - | hell-gelb | beige | hell-braun |
| 13(Vgl.) | - | 16 | - | 24 | - | - | 60 | hell-gelb | beige | braun |
| 14 | - | 16 | - | 24 | - | 5 | 55 | hell-gelb | beige | hell-braun |

vgl. = Vergleichsversuch

Hinsichtlich Eigenfarbe zeigen die Formmassen, die kleine Anteile des Polycarbonats A enthalten (Beispiele 2, 4, 6, 8, 10, 12 und 14), gegenüber den Vergleichsbeispielen (Beispiele 1, 3, 5, 7, 9, 11 und 13) ein deutlich günstigeres Verhalten.

b) Abbau bei thermischer Belastung

Die Messungen wurden an einem Rotationsbiskosimeter (Typ: Contraves Rheomat 115) durchgeführt, dessen Ausgang an einen Schreiber der Fa. Rikadenki (Modell WE-21) angeschlossen ist.

Zur Messung wurden jeweils 8 g der Granulate, die zuvor im Vakuum getrocknet worden sind, in einem offenen Reagenzglas, das in einem regelbaren Heizblock steht, 60 min auf 300° C erhitzt. Das Drehmoment M, das über einen zylinderförmigen Rührer (Länge: 25 mm, Durchmesser: 8 mm) aufgewendet werden muß, um die konstante Drehzahl von 5 U/min aufrecht zu erhalten, ist ein Maß für die Schmelzviskosität der Produkte. Der Schreiber zeichnet die Drehmoment-Abnahme gegen die Verweilzeit auf. Zunehmende Viskosität zeigt eine Molekulargewichtszunahme (Vernetzung) an, abnehmende Viskosität deutet auf eine Molekulargewichtsabnahme durch Zersetzung hin (siehe: J. I. Eguiazabal, J. Nazabal, Makromol. Chem., Macromol. Symp. 20/21 (1988) 255 bis 267). Bei abnehmender Viskosität ist die Steilheit (Steigung) der Kurve ein Maß für den Molekulargewichtsabbau der Produkte.

Die Ergebnisse zum Abbau der Massen anhand ausgewählter Beispiele (siehe Tabelle 1) sind in der Fig. 1 bis 5 zusammengefaßt.

Die stabilisierten, d.h. Polycarbonat B enthaltenden Formmassen weisen durchweg einen erkennbar flacheren Viskositätsabfall auf.

**Patentansprüche**
**Patentansprüche für folgende Vertragsstaaten : DE, FR, GB, IT**

1. Thermoplastische, thermostabile Formmassen, enthaltend
   A) 1 bis 99 Gew.-Teile Vinylpolymerisat,
   B) 0,5 bis 15 Gew.-Teile eines aromatischen Polycarbonats mit einem Molekulargewicht $\overline{M}_w$ - (Gewichtsmittel) von mindestens 2000 auf Basis von substituierten Dihydroxydiphenylcycloalkanen, das bifunktionelle Carbonatstruktureinheiten der Formel (VIII) enthält,

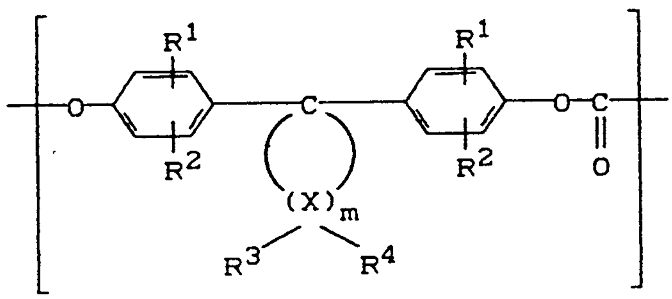

(I)

   worin
   $R^1$ und $R^2$ unabhängig voneinander Wasserstoff, Halogen, $C_1$-$C_8$-Alkyl, $C_5$-$C_6$-Cycloalkyl, $C_6$-$C_{10}$-Aryl, und $C_7$-$C_{12}$-Aralkyl,
   m eine ganze Zahl von 4 bis 7,
   $R^3$ und $R^4$ für jedes X individuell wählbar, unabhängig voneinander Wasserstoff oder $C_1$-$C_6$-Alkyl
   und
   X Kohlenstoff bedeuten,
   mit der Maßgabe, daß an mindestens einem Atom X $R^3$ und $R^4$ gleichzeitig Alkyl bedeuten,
   und gegebenenfalls
   C) 0 bis 75 Gew.-Teile eines weiteren thermoplastischen Harzes.

2. Formmassen gemäß Anspruch 1, enthaltend 0,7 bis 10 Gew.-Teile B.

3. Formmassen gemäß Anspruch 1, enthaltend 1 bis 7 Gew.-Teile B.

4. Formmassen gemäß Anspruch 1, enthaltend als A thermoplastische kautschukfreie Vinylcopolymerisate aus
   50 bis 98 Gew.-% Styrol, α-Methylstyrol, kernsubstiuiertem Styrol, Methylmethacrylat oder Mischungen daraus und
   50 bis 2 Gew.-% Acrylnitril, Methacrylnitril, Methylmethacrylat, Maleinsäureanhydrid, N-substituiertem Maleinimid und Mischungen daraus.

5. Formmassen gemäß Anspruch 1, enthaltend als A Pfropfpolymerisate harzbildender Vinylmonomerer auf einen Kautschuk.

6. Formmassen gemäß Anspruch 1, enthaltend als A sowohl thermoplastische kautschukfreie Vinylcopolymerisate als auch Pfropfpolymerisate harzbildender Vinylmonomerer auf einen Kautschuk.

**7.** Formmassen gemäß Anspruch 5, wobei die Pfropfpolymerisate solche aus
5 bis 95, vorzugsweise 30 bis 80, Gew.-Teilen, eines Copolymeren aus
50 bis 95 Gew.-Teilen Styrol, α-Methylstyrol, halogen- oder methylkernsubstituierten Styrolen, Methylmethacrylat oder Mischungen dieser Verbindungen und
5 bis 50 Gew.-Teilen Acrylnitril, Methacrylnitril, Methylmethacrylat, Maleinsäurcanhydrid, $C_1$-$C_4$-alkyl- bzw. phenyl-N-substituierten Maleinimiden oder Mischungen dieser Verbindungen auf
5 bis 95, vorzugsweise 20 bis 70, Gew.-Teilen Polymerisat mit einer Glasübergangstemperatur unter - 10 °C
sind.

**8.** Formmassen gemäß Anspruch 5, wobei die Pfropfpolymerisate erhalten worden sind durch Pfropfpolymerisation von
10 bis 70 Gew.-%, bezogen auf Pfropfpolymerisat mindestens eines Acrylsäureesters, Methacrylsäureesters, oder 10 bis 70 Gew.-% eines Gemisches aus 10 bis 50 Gew.-%, bezogen auf Gemisch, Acrylnitril oder Acrylsäureester, und 50 bis 90 Gew.-%, bezogen auf Gemisch, Styrol, als Pfropfauflage auf
30 bis 90 Gew.-%, bezogen auf Pfropfpolymerisat, eines Butadien-Polymerisats mit mindestens 50 Gew.-% Butadienresten als Pfropfgrundlage.

**9.** Formmassen gemäß Anspruch 5, worin der Kautschuk ein Dienkautschuk, Acrylatkautschuk, Silikonkautschuk oder Ethylen-Propylen-Dien-Kautschuk ist.

**10.** Formmassen gemäß Anspruch 1, enthaltend Stabilisatoren, Pigmente, Fließhilfsmittel, Entformungsmittel, Flammschutzmittel und/oder Antistatika.

**Patentanspruch für folgenden Vertragsstaat : ES**

**1.** Verfahren zur Stabilisierung thermoplastischer Vinylpolymerisat-Formmassen, dadurch gekennzeichnet, daß man in solche Massen bei 200 bis 350° C ein aromatisches Polycarbonat (B) einarbeitet, so daß die Formmasse enthält:
A) 1 bis 99 Gew.-Teile Vinylpolymerisat,
B) 0,5 bis 15 Gew.-Teile eines aromatischen Polycarbonats mit einem Molekulargewicht $\overline{M}_w$ - (Gewichtsmittel) von mindestens 2000 auf Basis von substituierten Dihydroxydiphenylcycloalkanen, das bifunktionelle Carbonatstruktureinheiten der Formel (VIII) enthält,

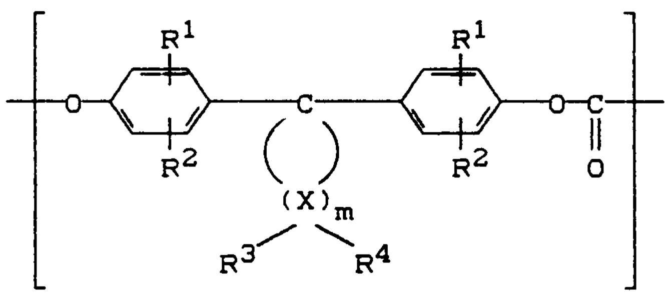

(VIII)

worin
$R^1$ und $R^2$ unabhängig voneinander Wasserstoff, Halogen, $C_1$-$C_8$-Alkyl, $C_5$-$C_6$-Cycloalkyl, $C_6$-$C_{10}$-Aryl, und $C_7$-$C_{12}$-Aralkyl,
m eine ganze Zahl von 4 bis 7,
$R^3$ und $R^4$ für jedes X individuell wählbar, unabhängig voneinander Wasserstoff oder $C_1$-$C_6$-Alkyl
und
X Kohlenstoff bedeuten,
mit der Maßgabe, daß an mindestens einem Atom X $R^3$ und $R^4$ gleichzeitig Alkyl bedeuten,
und gegebenenfalls
C) 0 bis 75 Gew.-Teile eines weiteren thermoplastischen Harzes.

## Claims

## Claims for the following Contracting States : DE, FR, GB, IT

**1.** Thermoplastic, heat-stable moulding compounds containing

A) 1 to 99 parts by weight vinyl polymer,

B) 0.5 to 15 parts by weight of an aromatic polycarbonate with a molecular weight $M_w$ (weight average) of at least 2,000 based on substituted dihydroxydiphenyl cycloalkanes which contains bifunctional carbonate structural units corresponding to formula (VIII):

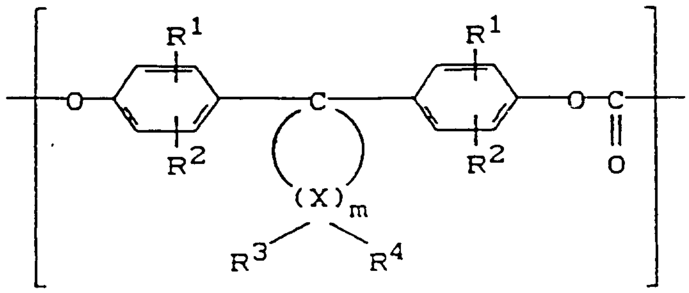

(I)

in which

| | |
|---|---|
| $R^1$ and $R^2$ | independently of one another represent hydrogen, halogen, $C_{1-8}$ alkyl, $C_{5-6}$ cycloalkyl, $C_{6-10}$ aryl and $C_{7-12}$ aralkyl, |
| m | is an integer of from 4 to 7, |
| $R^3$ and $R^4$ | may be individually selected for each X and independently of one another represent hydrogen or $C_{1-6}$ alkyl and |
| X | represents carbon, with the proviso that, at at least one atom X, both $R^3$ and $R^4$ are alkyl, |

and, optionally,

C) 0 to 75 parts by weight of another thermoplastic resin.

**2.** Moulding compounds as claimed in claim 1 containing 0.7 to 10 parts by weight B.

**3.** Moulding compounds as claimed in claim 1 containing 1 to 7 parts by weight B.

**4.** Moulding compounds as claimed in claim 1 containing as A thermoplastic rubber-free vinyl copolymers of

50 to 98% by weight styrene, α-methyl styrene, ring-substituted styrene, methyl methacrylate or mixtures thereof and

50 to 2% by weight acrylonitrile, methacrylonitrile, methyl methacrylate, maleic anhydride, N-substituted maleic imide and mixtures thereof.

**5.** Moulding compounds as claimed in claim 1 containing as A graft polymers of resin-forming vinyl monomers on a rubber.

**6.** Moulding compounds as claimed in claim 1 containing as A both thermoplastic rubber-free vinyl copolymers and graft polymers of resin-forming vinyl monomers on a rubber.

**7.** Moulding compounds as claimed in claim 5, in which the graft polymers are those of 5 to 95 parts by weight and preferably 20 to 80 parts by weight of a mixture of

50 to 95 parts by weight styrene, α-methyl styrene, halogen or alkyl-ring-substituted styrenes, $C_{1-8}$ alkyl methacrylates, $C_{1-8}$ alkyl acrylates or mixtures of these compounds and

5 to 50 parts by weight acrylonitrile, methacrylonitrile, methyl methacrylate, maleic anhydride, $C_{1-4}$-alkyl- or phenyl-N-substituted maleic imides or mixtures of these compounds

on 5 to 95 parts by weight and preferably 20 to 70 parts by weight rubber having a glass transition temperature below -10 °C.

**8.** Moulding compounds as claimed in claim 5, the graft polymers having been obtained by graft polymerization of

10 to 70% by weight, based on graft polymer, of at least one acrylate, methacrylate or 10 to 70% by weight of a mixture of 10 to 50% by weight, based on mixture, of acrylonitrile or acrylate and 50 to 90% by weight, based on mixture , of styrene as the graft shell on

30 to 90% by weight , based on graft polymer, of a butadiene polymer containing at least 50% by weight butadiene units as the graft base.

**9.** Moulding compounds as claimed in claim 5, in which the rubber is a diene rubber, an acrylate rubber, a silicone rubber or an ethylene-propylene-diene rubber.

**10.** Moulding compounds as claimed in claim 1 containing pigments, flow aids, mould release agents, flameproofing agents and/or antistatic agents.

**Claim for the following Contracting State : ES**

**1.** A process for stabilizing thermoplastic vinyl polymer moulding compounds, characterized in that an aromatic polycarbonate (B) is incorporated in the moulding compound at 200 to 350 °C so that the moulding compound contains:

A) 1 to 99 parts by weight vinyl polymer,

B) 0.5 to 15 parts by weight of an aromatic polycarbonate with a molecular weight $M_w$ (weight average) of at least 2,000 based on substituted dihydroxydiphenyl cycloalkanes which contains bifunctional carbonate structural units corresponding to formula (VIII):

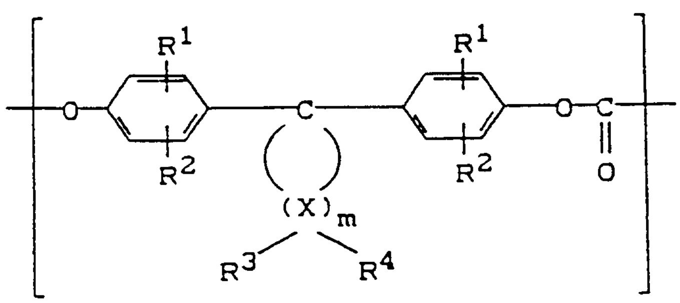

(VIII)

in which

$R^1$ and $R^2$ independently of one another represent hydrogen, halogen, $C_{1-8}$ alkyl, $C_{5-6}$ cycloalkyl, $C_{6-10}$ aryl and $C_{7-12}$ aralkyl,

m is an integer of from 4 to 7,

$R^3$ and $R^4$ may be individually selected for each X and independently of one another represent hydrogen or $C_{1-6}$ alkyl and

X represents carbon, with the proviso that, at at least one atom X, both $R^3$ and $R^4$ are alkyl,

and, optionally,

C) 0 to 75 parts by weight of another thermoplastic resin.

**Revendications**

**Revendications pour les Etats contractants suivants : DE, FR, GB, IT**

**1.** Matières à mouler thermoplastiques thermiquement stables contenant

A) 1 à 99 parties en poids de polymère vinylique,

B) 0,5 à 15 parties en poids d'un polycarbonate aromatique ayant un poids moléculaire moyen en poids $\overline{M}_w$ d'au moins 2 000 à base de dihydroxydiphénylcycloalcanes, qui contient des motifs carbonates bifonctionnels de formule (VIII),

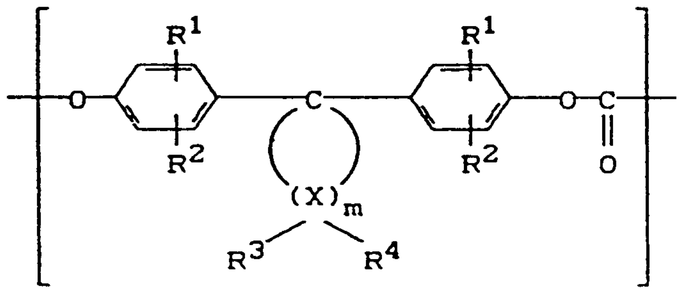

(I)

dans laquelle

$R^1$ et $R^2$ représentent indépendamment l'un de l'autre l'hydrogène, un halogène, un groupe alkyle en $C_1$-$C_8$, un groupe cycloalkyle en $C_5$ ou $C_6$, un groupe aryle en $C_6$-$C_{10}$ ou un groupe aralkyle en $C_7$-$C_{12}$,

m est un nombre entier de 4 à 7,

$R^3$ et $R^4$ sont choisis séparément pour chaque X et représentent indépendamment l'un de l'autre l'hydrogène ou un groupe alkyle en $C_1$-$C_6$,

et

X représente le carbone avec la condition que, sur au moins un atome X, les restes $R^3$ et $R^4$ représentent simultanément un groupe alkyle,

et éventuellement

C) 0 à 75 parties en poids d'une autre résine thermoplastique.

**2.** Matières à mouler selon la revendication 1, contenant 0,7 à 10 parties en poids de B.

**3.** Matières à mouler selon la revendication 1, contenant 1 à 7 parties en poids de B.

**4.** Matières à mouler selon la revendication 1, contenant comme composant A des copolymères vinyliques sans caoutchouc, thermoplastiques, de

50 à 98 % en poids de styrène, d'α-méthylstyrène, de styrène substitué au noyau, de méthacrylate de méthyle ou de leurs mélanges et

50 à 2 % en poids d'acrylonitrile, de méthacrylonitrile, de méthacrylate de méthyle, d'anhydride maléique, de maléimide N-substitué ou leurs mélanges.

**5.** Matières à mouler selon la revendication 1, contenant comme composant A des polymères de monomères vinyliques formant une résine greffés sur un caoutchouc.

**6.** Matières a mouler selon la revendication 1, contenant comme composant A aussi bien des copolymères vinyliques sans caoutchouc thermoplastiques que des polymères de monomères vinyliques formés d'une résine greffés sur un caoutchouc.

**7.** Matières à mouler selon la revendication 5, dans lesquelles les polymères greffés sont des polymères de

5 à 95, de préférence 30 à 80, parties en poids d'un copolymère de 50 à 95 parties en poids de styrène, d'α-méthylstyrène, de styrènes halogénés ou méthylés au noyau, de méthacrylate de méthyle ou de mélanges de ces composés et

5 à 50 parties en poids d'acrylonitrile, de méthacrylonitrile, de méthacrylate de méthyle, d'anhydride maléique, de N-(alkyl en $C_1$-$C_4$)- ou phényl-maléimides ou de mélanges de ces composés, greffés sur 5 à 95, de préférence 20 à 70, parties en poids d'un polymère ayant une température de transition vitreuse inférieure à -10 °C.

**8.** Matières à mouler selon la revendication 5, dans lesquelles les polymères greffés ont été obtenus par polymérisation greffée de

10 à 70 % en poids, par rapport au polymère greffé, d'au moins un ester acrylique, un ester méthacrylique, ou 10 à 70 % en poids d'un mélange de 10 à 50 % en poids, par rapport au mélange, d'acrylonitrile ou d'ester acrylique et 50 à 90 % en poids, par rapport au mélange, de styrène comme monomères de greffage sur

30 à 90% en poids, par rapport au polymère greffé, d'un polymère de butadiène ayant au moins 50 % en poids de restes de butadiène comme support de greffage.

**9.** Matières à mouler selon la revendication 5, dans lesquelles le caoutchouc est un caoutchouc diénique, un caoutchouc d'acrylate, un caoutchouc de silicone ou un caoutchouc éthylène-propylène-diène.

**10.** Matières à mouler selon la revendication 1, contenant des stabilisants, des pigments, des auxiliaires d'écoulement, des agents de démoulage, des agents ignifugeants et/ou des antistatiques.

**Revendication pour l'Etat contractant suivant : ES**

**1.** Procédé pour la stabilisation de matières à mouler thermoplastiques de polymères vinyliques, caractérisé en ce que l'on incorpore à 200-350 °C dans ces matières un polycarbonate aromatique (B) de manière que la matière à mouler contienne

A) 1 à 99 parties en poids de polymère vinylique,

B) 0,5 à 15 parties en poids d'un polycarbonate aromatique ayant un poids moléculaire moyen en poids $\overline{M}_w$ d'au moins 2 000 à base de dihydroxydiphénylcycloalcanes substitués, qui contient des motifs carbonates bifonctionnels de formule (VIII),

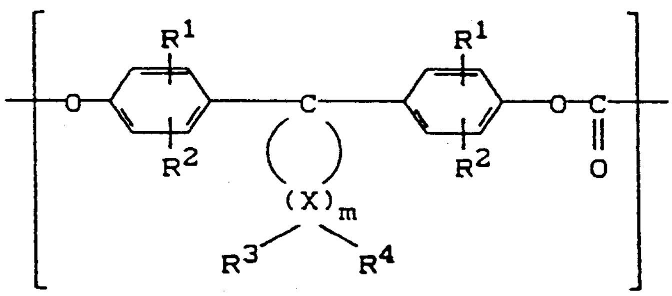

(VIII)

dans laquelle

$R^1$ et $R^2$ représentent indépendamment l'un de l'autre l'hydrogène, un halogène, un groupe alkyle en $C_1$-$C_8$, un groupe cycloalkyle en $C_5$ ou $C_6$, un groupe aryle en $C_6$-$C_{10}$ ou un groupe aralkyle en $C_7$-$C_{12}$,

m est un nombre entier de 4 à 7,

$R^3$ et $R^4$ sont choisis séparément pour chaque X et représentent indépendamment l'un de l'autre l'hydrogène ou un groupe alkyle en $C_1$-$C_6$,

et

X représente le carbone avec la condition que, sur au moins un atome X, les restes $R^3$ et $R^4$ représentent simultanément un groupe alkyle,

et éventuellement

C) 0 à 75 parties en poids d'une autre résine thermoplastique.

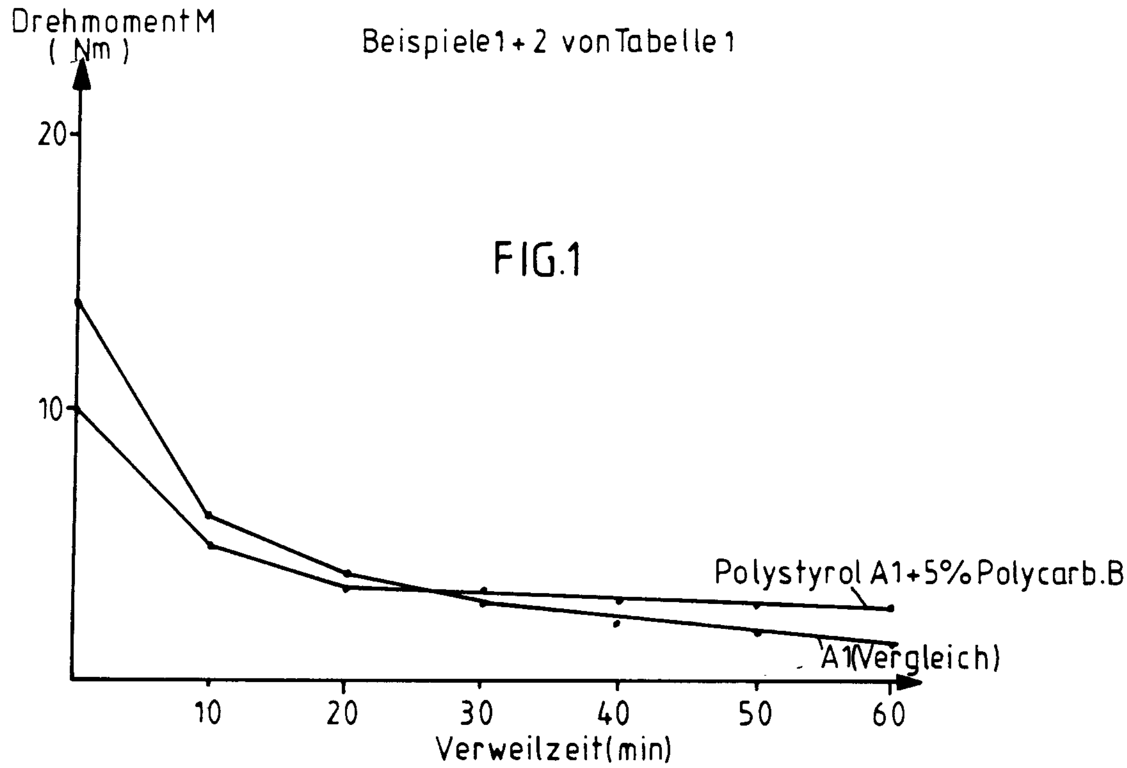
Drehmoment M
( Nm )
Beispiele 1 + 2 von Tabelle 1
20
10
Polystyrol A1+5% Polycarb.B
A1(Vergleich)
10
20
30
40
50
60
Verweilzeit(min)

FIG.1

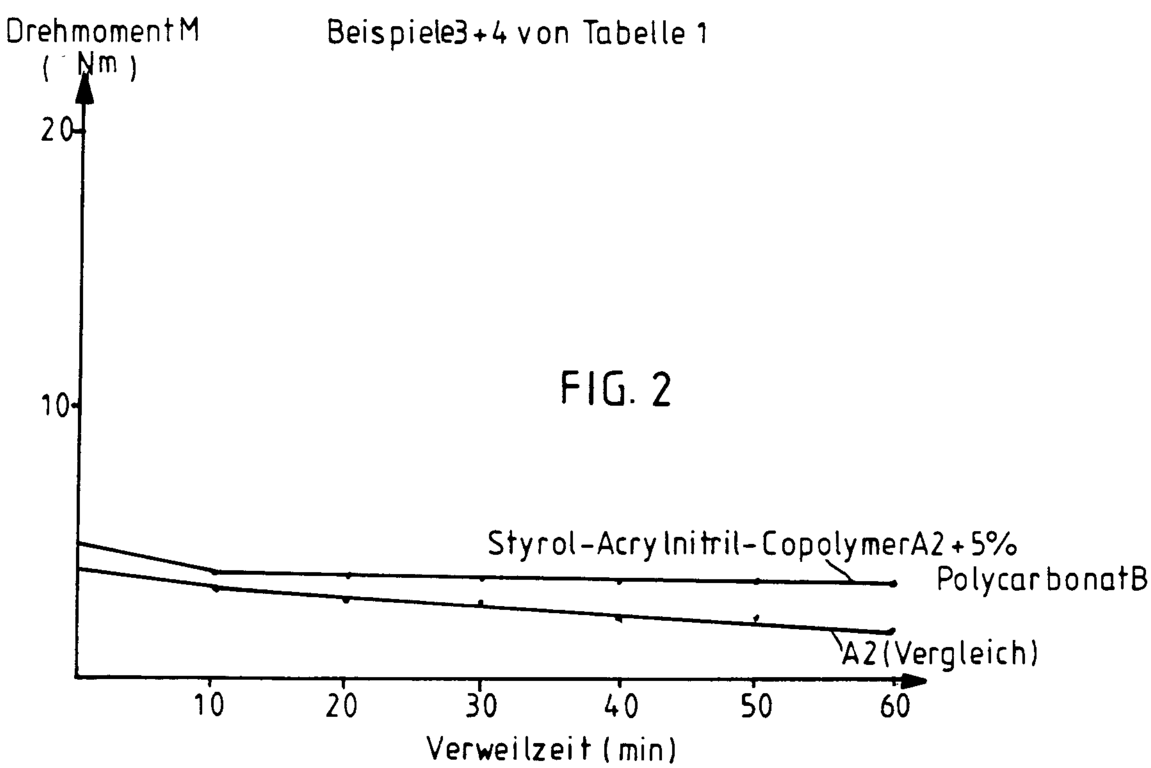
Drehmoment M
( Nm )
Beispiele 3 + 4 von Tabelle 1
20
10
Styrol-Acrylnitril-Copolymer A2 + 5%
Polycarbonat B
A2 (Vergleich)
10
20
30
40
50
60
Verweilzeit (min)

FIG. 2

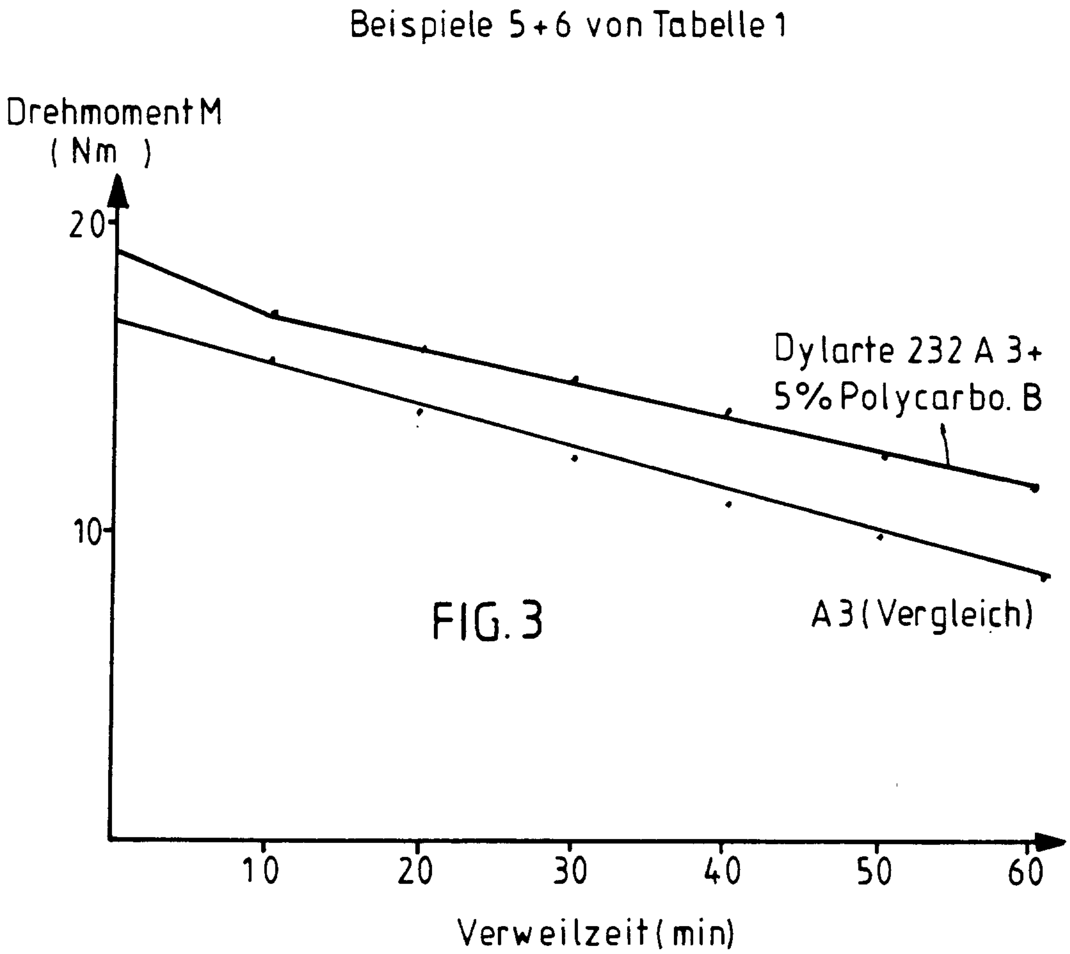
Beispiele 5+6 von Tabelle 1
Drehmoment M
( Nm )
20
10
Dylarte 232 A 3+
5% Polycarbo. B
A3 (Vergleich)
10
20
30
40
50
60
Verweilzeit (min)

FIG. 3

Beispiele 11+12 von Tabelle1

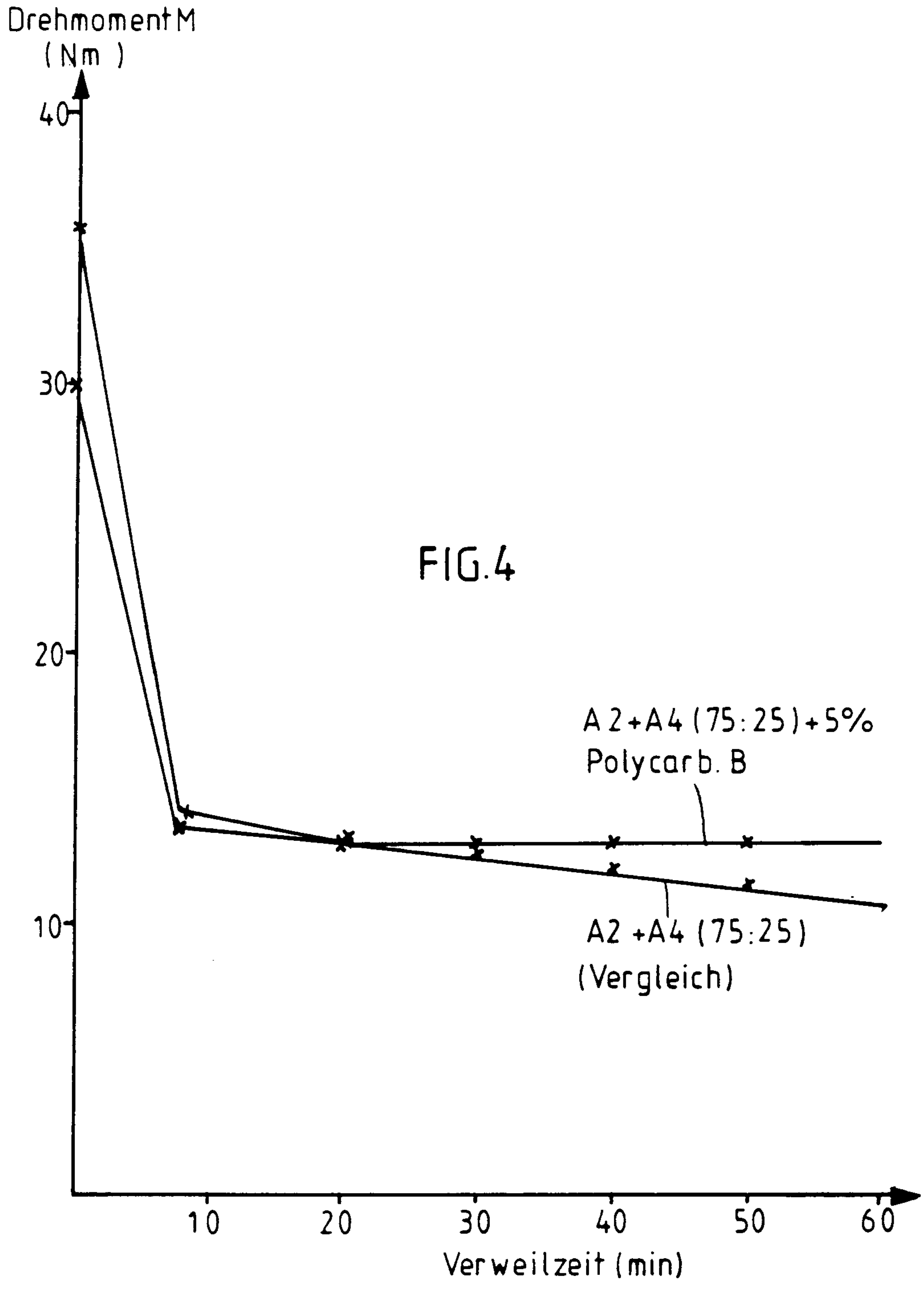

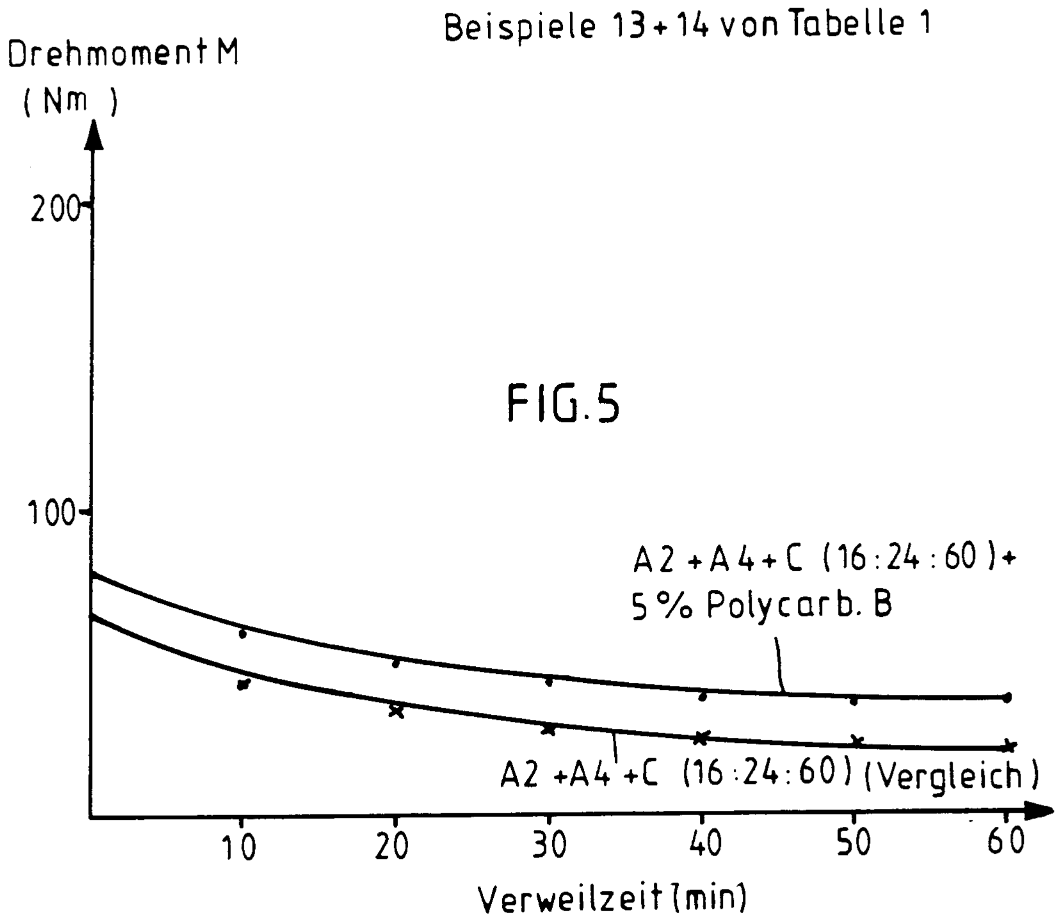
Beispiele 13 + 14 von Tabelle 1
Drehmoment M
( Nm )
200
100
A2 + A4 + C (16 : 24 : 60 ) +
5 % Polycarb. B
A2 + A4 + C (16 : 24 : 60) (Vergleich)
10
20
30
40
50
60
Verweilzeit (min)

FIG.5